# DEMANDE DE BREVET EUROPEEN

(11) **EP 2 133 240 A1**
(43) Date de publication de la demande: **16.12.2009**
(21) Numéro de dépôt: 09161144.2
(22) Date de dépôt: 26.05.2009
(51) Int. Cl.: B60R 9/04, B60R 9/058, B62D 25/06

(54) **Pavillon de toit de véhicule automobile**

(30) Priorité: 10.06.2008 FR 0853832
(71) Demandeur: Peugeot Citroën Automobiles SA, 78140 Vélizy-Villacoublay (FR)
(72) Inventeur: Perron, Frédéric Xavier, 92120, MONTROUGE (FR); Repesse, Pierre, 35310, SAINT THURIAL (FR); Brisse, Stéphane, 35220, CHATEAUBOURG (FR); Riviere, Séverine, 35580, LASSY (FR)
(74) Mandataire: Fernandez, Francis Lionel

(57) **Abrégé**

L'invention concerne un pavillon de toit (1) d'un véhicule automobile comportant une partie principale centrale (2) et des bords latéraux longitudinaux (3) destinés à être assemblés aux côtés supérieurs (4) de l'habitacle dudit véhicule. L'invention se **caractérise en ce que** des parties extrêmes (5, 6) desdits bords (3) présentent une gorge (8) apte à recevoir une fixation de barre de toit (16), tandis qu'une partie intermédiaire (7) desdits bords (3), située entre lesdites parties extrêmes (5, 6), ne comporte pas de gorge apte à recevoir une fixation de barre de toit (16). L'invention s'applique, par exemple, aux véhicules automobiles de tourisme.

## Description

La présente invention concerne un pavillon de toit d'un véhicule comportant une partie principale centrale et des bords latéraux longitudinaux. Elle concerne en outre un véhicule et notamment un véhicule automobile comportant un tel pavillon de toit.

Dans le cadre d'une utilisation particulière et tolérée d'un véhicule notamment automobile, un utilisateur peut augmenter un volume de chargement en adaptant des barres de toit transversales, généralement au nombre de deux, au niveau du pavillon du toit. En pratique, une première barre de toit est fixée dans une partie avant du pavillon de toit, tandis qu'une seconde barre de toit est fixée dans une partie arrière dudit pavillon.

Différentes solutions techniques ont déjà été mises en oeuvre pour réaliser des pavillons de toit susceptibles de recevoir des barres de toit après livraison du véhicule.

Le document FR-2436055 divulgue notamment un pavillon de toit comprenant un montant arrière, une gouttière et une partie latérale associée à ladite gouttière, cette partie latérale présentant une portion en creux. La gouttière s'étend sur toute la longueur du panneau de toit, jusqu'à l'extrémité du montant arrière, ou alors, jusqu'en un point situé en avant de ladite extrémité arrière, si ladite gouttière est découpée préalablement à l'assemblage du pavillon à la structure de caisse du véhicule. Un tel pavillon de toit est bien souvent assemblé par soudage par point par résistance électrique.

Pour des raisons d'ordre marketing et/ou technico-économiques, on a cherché, selon l'art antérieur, à supprimer les gorges visibles sur toute la longueur des bords latéraux des pavillons de toit. De surcroît, on a cherché à supprimer les enjoliveurs qui recouvrent et masquent les gorges inesthétiques.

Lorsque lesdites gorges et lesdits enjoliveurs sont supprimés, l'assemblage du pavillon de toit à la structure de caisse du véhicule est alors susceptible d'être effectué par soudage par laser.

Par exemple, le document FR-2886912 divulgue un pavillon de toit dont les bords latéraux ne comportent pas de gorge permettant la fixation de barres de toit. Dans ce cas, la fixation desdites barres nécessite la pose préalable d'un fût qui traverse l'épaisseur du pavillon et l'épaisseur d'une paroi interne de la structure de caisse. La fixation de ce fût est effectuée au moyen d'une vis dont la tête est située à l'extérieur du véhicule, et d'un écrou en contact avec l'intérieur de la paroi précitée de la structure de caisse de ce véhicule. Un tel assemblage requiert ainsi la mise en place d'entretoises lors du montage du pavillon par l'intérieur du véhicule.

De même, dans un autre exemple, le document DE-19542109 présente un système de fixation de barre de toit sur un pavillon de toit de véhicule, soutenue au moyen d'une équerre fixée au côté de caisse intérieur au moment du montage du pavillon sur la caisse. Un tel système est fixé à côté d'une gorge formée au niveau de la jointure entre le pavillon et le côté de caisse.

Ainsi, les pavillons de toit divulgués dans les documents ci-dessus, cités en exemples, présentent des inconvénients en termes d'ergonomie, certaines pièces devant être montées depuis l'intérieur du véhicule.

Compte tenu de ce qui précède, un problème que se propose de résoudre l'invention est de fournir un pavillon de toit d'un véhicule notamment automobile, qui satisfasse aux contraintes de style, d'esthétisme et de réduction des coûts de plus en plus contraignantes exigées par les constructeurs automobiles, ledit pavillon doit autorisant la fixation de barres de toit transversales identiques au niveau du pavillon du toit, et ce, quel que soit le type de véhicules, la fixation desdites barres de toit étant effectuée après la livraison du véhicule, sans besoin de pièces supplémentaires. En outre, l'assemblage d'un tel pavillon de toit pourra être effectué en optimisant l'efficacité et la productivité du personnel ayant la charge d'assurer le montage et en veillant à ce que ce personnel évolue au sein d'un milieu de travail sécuritaire et de qualité, à l'extérieur du véhicule.

La solution proposée de l'invention à ce problème a pour premier objet un pavillon de toit d'un véhicule notamment automobile comportant une partie principale centrale et des bords latéraux longitudinaux destinés à être assemblés aux côtés supérieurs de l'habitacle dudit véhicule, **caractérisé en ce que** des parties extrêmes desdits bords latéraux présentent une gorge apte à recevoir une fixation de barre de toit, tandis qu'une partie intermédiaire desdits bords latéraux, située entre lesdites parties extrêmes, ne comporte pas de gorge apte à recevoir une fixation de barre de toit ou présente un repli formant épaulement.

Elle a pour second objet un véhicule et notamment un véhicule automobile, **caractérisé en ce qu**'il comporte un pavillon de toit conforme au pavillon ci-dessus.

De manière avantageuse, - la partie intermédiaire est assemblée au côté supérieur de l'habitacle par soudage par laser ; - la gorge est assemblée au côté supérieur de l'habitacle par soudage par point par résistance électrique ; - le côté supérieur de l'habitacle du véhicule présente un bord oblique, l'épaulement de la partie intermédiaire est positionné contre ledit bord oblique , et l'assemblage de la partie intermédiaire audit côté supérieur est réalisé au niveau du pli de l'épaulement ; - la gorge est fixée au côté supérieur de l'habitacle de caisse au niveau d'une zone renforcée formée par une platine, un renfort et une doublure ; - le bord latéral s'étend sensiblement selon la direction longitudinale Z, sur une longueur L1 + L2 + L1, les longueurs L1 correspondant aux longueurs des parties extrêmes, la longueur L2 correspondant à la longueur de la partie intermédiaire, la longueur L1 étant sensiblement inférieure à la longueur L2 ; - la gorge s'étend sensiblement dans la direction longitudinale Z sur une longueur L1, sensiblement dans la direction transversale X sur une largeur 11, et sensiblement dans la direction verticale Y sur une profondeur h1, lesdites longueur L1, largeur 11 et profondeur h1 étant choisies de sorte à permettre la fixation d'une barre de toit transversale ; - la longueur L1 de la partie extrême est comprise entre 50 mm et 800 mm et la largeur 11 de la gorge est comprise entre 10 mm et 40 mm.

D'autres buts, avantages et caractéristiques de l'invention seront mieux compris à la lecture de la description des modes de réalisation préférés qui suivent, non limitatifs de l'objet et de la portée de la présente demande de brevet, et qui sont rédigés au regard des dessins annexés, dans lesquels :
- la figure 1 est une vue de dessus d'un véhicule automobile comportant un pavillon de toit selon l'invention ;
- la figure 2 est une vue détaillée d'une partie extrême d'un bord latéral d'un pavillon de toit selon l'invention, qui présente une gorge apte à recevoir une fixation de barre de toit ;
- la figure 3 est une coupe transversale d'un partie intermédiaire d'un bord latéral d'un pavillon de toit selon l'invention, assemblé à un côté supérieur d'un habitable d'un véhicule automobile ;
- la figure 4 est une coupe transversale d'une gorge d'une partie extrême d'un bord latéral d'un pavillon de toit selon l'invention, assemblé à un côté supérieur d'un habitacle d'un véhicule automobile ; et
- la figure 5 est une coupe transversale montrant la fixation d'une barre de toit au niveau d'une gorge du pavillon de toit selon l'invention.

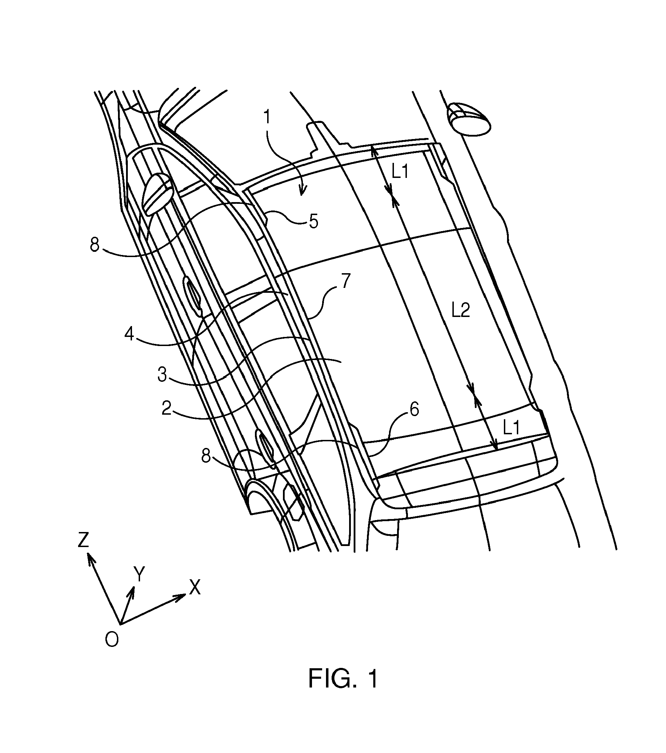

La description qui suit se réfère uniquement à la partie de côté gauche du pavillon de toit selon l'invention. Néanmoins, elle s'applique *mutatis mutandis* à une structure équivalente de côté droit. Par ailleurs, dans la description qui suit, on adoptera des orientations longitudinale, transversale et verticale, qui sont indiquées par le trièdre Z, X, Y de la figure 1.

La figure 1 représente un pavillon de toit 1 selon l'invention d'un véhicule automobile à toit non ouvrant. Bien évidemment la présente invention peut également s'appliquer à un véhicule dont le pavillon comporte un toit ouvrant.

Ce pavillon de toit 1 présente une forme sensiblement rectangulaire. Il peut être plus ou moins incurvé à la fois longitudinalement et transversalement suivant les types de véhicules. Avantageusement, il est sensiblement plan.

Le pavillon de toit 1 selon l'invention comporte une partie principale centrale 2. Il comprend en outre un bord latéral 3 apte assemblé à un côté supérieur 4 d'un habitacle du véhicule automobile.

Le bord latéral 3 s'étend sensiblement selon la direction longitudinale Z, sur toute la longueur du pavillon de toit 1. Il s'étend plus particulièrement sur une longueur cumulée L1 + L2 + L1 dudit pavillon de toit.

Les longueurs L1 correspondent aux longueurs des deux parties extrêmes 5, 6 du bord latéral 3. La longueur L2 correspond à la longueur d'une partie intermédiaire 7 située entre lesdites parties extrêmes 5, 6. En pratique, les longueurs L1 sont sensiblement inférieures à la longueur L2. Par exemple, les longueurs L1 sont comprises entre 50 mm et 800 mm, plus préférentiellement, entre 80 mm et 400 mm.

Selon l'invention, chaque partie extrême 5, 6 présente une gorge 8 apte à recevoir une fixation de barre de toit. La partie intermédiaire 7 ne présente pas une telle gorge 8, mais un repli formant épaulement. De ce fait, le pavillon de toit 1 et le côté supérieur 4 sont assemblés selon un ensemble offrant une continuité planaire conférant une certaine esthétique au véhicule.

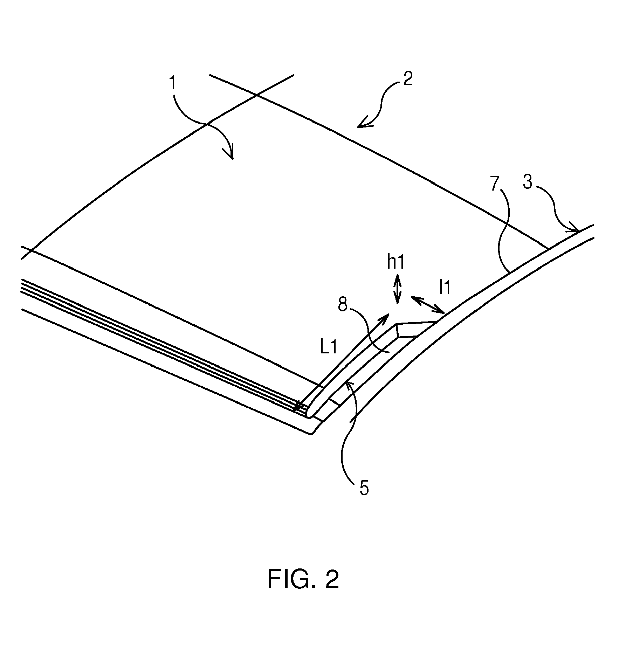

La partie extrême 5 avant du bord latéral 3 pavillon de toit 1 selon l'invention est détaillée à la figure 2. Cette partie extrême 5 est par exemple sensiblement symétrique à la partie extrême 6 arrière dudit pavillon 1 par rapport à un plan médian du bord latéral 3.

Ainsi que cela apparaît à la figure 2, la gorge 8 est assemblée au côté supérieur 4 de l'habitacle du véhicule. Elle peut présenter tout type de forme, par exemple celle, préférentielle, d'un trapèze rectangle. Elle s'étend sensiblement dans la direction longitudinale Z sur toute la longueur L1, sensiblement dans la direction transversale X sur une largueur 11, et sensiblement dans la direction verticale Y sur une profondeur h1, lesdites longueur L1, largeur 11 et profondeur h1 étant choisies de sorte à permettre la fixation d'une barre de toit transversale. En pratique, la largeur 11 est comprise entre 10 mm et 40 mm et, plus préférentiellement, entre 15 mm et 25 mm, et la profondeur h1 est comprise entre 5 mm et 30 mm et, plus préférentiellement, entre 10 mm et 20 mm.

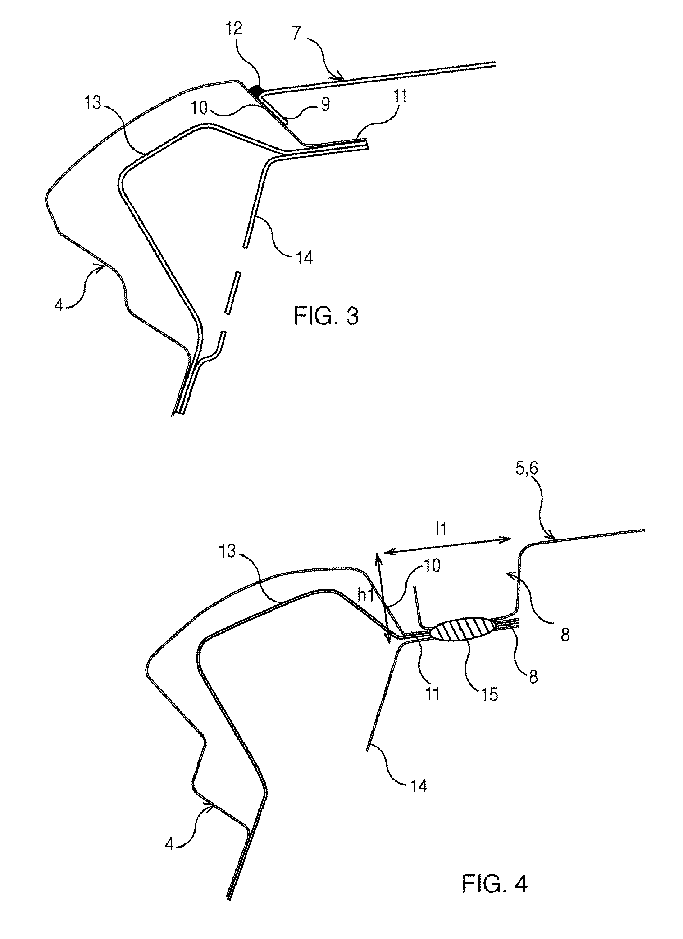

L'assemblage des parties extrêmes 5, 6 et de la partie intermédiaire 7 du bord latéral 3 du pavillon de toit 1 au côté supérieur 4 de l'habitacle du véhicule est détaillé aux figures 3 et 4.

Ainsi que cela est représenté à la figure 3, la partie intermédiaire 7 du bord latéral longitudinal 3 est repliée vers l'habitacle pour former un épaulement 9. Le côté supérieur 4 de l'habitacle du véhicule présente un bord oblique 10 par rapport à la direction transversale X du pavillon de toit 1 selon l'invention. Ce bord oblique 10 se prolonge par une platine 11 sensiblement parallèle à la direction transversale X du pavillon de toit 1. L'épaulement 9 est positionné contre et épouse le bord oblique 10. La partie intermédiaire 7 est assemblée au côté supérieur 4 de l'habitacle au niveau du pli de l'épaulement 9, à la jointure entre ledit épaulement et le bord oblique 10. L'assemblage est effectué par soudage, préférentiellement par soudage par laser 12.

Ainsi que cela est représenté à la figure 4, la gorge 8 de la partie extrême 5, 6 présente une section sensiblement en U. Le côté supérieur 4 de l'habitacle du véhicule présente, au niveau de cette partie extrême 5, 6, un bord oblique 10 qui se prolonge par une platine 11 sensiblement parallèle à la direction transversale X du pavillon de toit 1. Le fond de la gorge 8 est assemblé au côté supérieur 4 de l'habitacle, au niveau d'une zone renforcée formée par la platine 11, un renfort 13 et d'une doublure 14. L'assemblage est effectué par soudage, préférentiellement par soudage par point par résistance électrique 15.

On notera que la zone renforcée est présente sur l'entièreté de la longueur L1 + L2 + L1 du bord latéral 3 du pavillon de toit 1 selon l'invention. Toutefois, le pavillon de toit 1 est assemblé au côté supérieur 4 de l'habitacle directement au niveau de cette zone renforcée uniquement à l'aplomb des gorges 8.

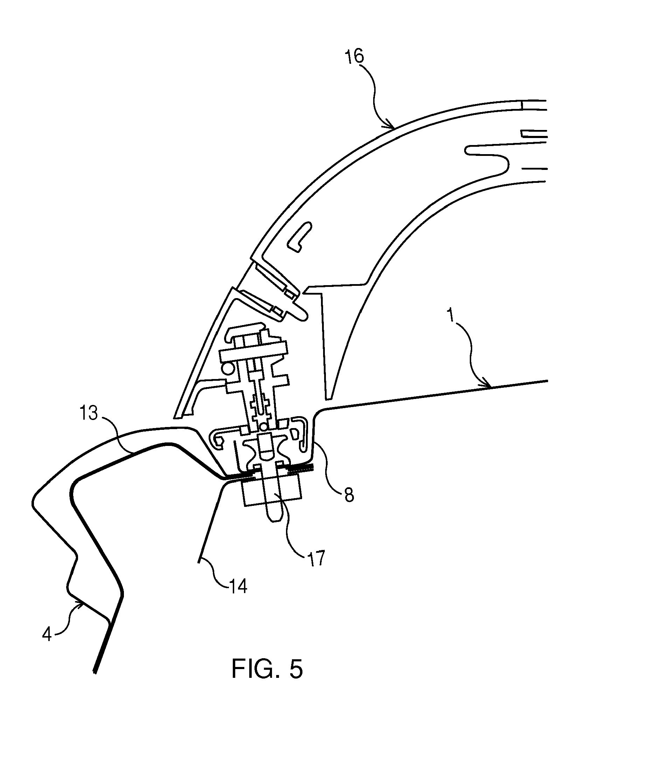

Ainsi que cela apparaît à la figure 5, des systèmes de fixation classiques de barres de toit transversales 16 sont susceptibles d'être fixés, au moyen des gorges 8, aux parties extrêmes 5, 6 des bords latéraux 3 du pavillon de toit selon l'invention. De manière avantageuse, on utilisera un système de fixation de barres de toit 16 ne nécessitant pas un perçage du pavillon de toit 1. Par exemple, un pied 17 support de fixation peut être directement assemblé au creux des gorges 8. Ce pied 17 n'est pas visible lorsque le véhicule n'est pas muni de barres de toit. En effet, les gorges 8 sont avantageusement munies d'enjoliveurs à l'effet de cacher lesdits pieds 17.

En définitive, on obtient, selon l'invention, un pavillon de toit hybride, munies de gorges de fixation de barres de toit disposées uniquement aux extrémités des bords latéraux dudit pavillon. L'assemblage du pavillon de toit est effectué selon des techniques mixtes, par soudage au laser et par point par résistance électrique selon la section considérée du bord latéral. Il n'est pas nécessaire d'effectuer un montage d'une pièce additionnelle de l'intérieur du véhicule, lors de l'assemblage du pavillon de toit. Le véhicule muni d'un tel pavillon présente une esthétique marquée, les gorges, éventuellement cachées par des enjoliveurs sur une longueur limitée des bords latéraux, n'étant pas ou peu visibles.

Bien entendu, l'invention ne se limite pas au mode de réalisation décrit et représenté dans les figures jointes et l'homme du métier pourra être amené, grâce à des opérations de routine, à réaliser d'autres modes de réalisation non décrits explicitement, sans sortir du cadre et de la portée de la présente invention. En particulier la présente invention n'est pas limitée aux seuls véhicules automobiles mais peut également s'appliquer à tout véhicule comportant un pavillon de toit et notamment aux véhicules utilitaires.

## Revendications

1. Pavillon de toit (1) d'un véhicule, tel qu'un véhicule automobile, comportant une partie principale centrale (2) et des bords latéraux longitudinaux (3) destinés à être assemblés aux côtés supérieurs (4) de l'habitacle dudit véhicule, **caractérisé en ce que** des parties extrêmes (5, 6) desdits bords (3) présentent une gorge (8) apte à recevoir une fixation de barre de toit (16), tandis qu'une partie intermédiaire (7) desdits bords (3), située entre lesdites parties extrêmes (5, 6), présente un repli formant épaulement (9).

2. Pavillon de toit (1) d'un véhicule, tel qu'un véhicule automobile, comportant une partie principale centrale (2) et des bords latéraux longitudinaux (3) destinés à être assemblés aux côtés supérieurs (4) de l'habitacle dudit véhicule, **caractérisé en ce que** des parties extrêmes (5, 6) desdits bords (3) présentent une gorge (8) apte à recevoir une fixation de barre de toit (16), tandis qu'une partie intermédiaire (7) desdits bords (3), située entre lesdites parties extrêmes (5, 6), ne comporte pas de gorge apte à recevoir une fixation de barre de toit (16).

3. Pavillon de toit (1) selon l'une des revendications 1 ou 2, **caractérisé en ce que** la partie intermédiaire (7) est assemblée au côté supérieur (4) de l'habitacle par soudage par laser.

4. Pavillon de toit (1) selon l'une des revendications 1, 2 ou 3, **caractérisé en ce que** la gorge (8) est assemblée au côté supérieur (4) de l'habitacle par soudage par point par résistance électrique.

5. Pavillon de toit (1) selon l'une des revendications précédentes, **caractérisé en ce** le côté supérieur (4) de l'habitacle du véhicule présente un bord oblique (10), en ce que l'épaulement (9) de la partie intermédiaire (7) est positionné contre ledit bord oblique (10), et en ce que l'assemblage de la partie intermédiaire (7) audit côté supérieur (4) est réalisé au niveau du pli de l'épaulement (9).

6. Pavillon de toit (1) selon l'une des revendications précédentes, **caractérisé en ce que** la gorge (8) est fixée au côté supérieur (4) de l'habitacle de caisse au niveau d'une zone renforcée formée par une platine (11), un renfort (13) et une doublure (14).

7. Pavillon de toit (1) selon l'une des revendication précédentes, **caractérisé en ce que** le bord latéral (3) s'étend sensiblement selon la direction longitudinale Z, sur une longueur L1 + L2 + L1, les longueurs L1 correspondant aux longueurs des parties extrêmes (5, 6), la longueur L2 correspondant à la longueur de la partie intermédiaire (7), et **en ce que** la longueur L1 est sensiblement inférieure à la longueur L2.

8. Pavillon de toit (1) selon l'une des revendications précédentes, **caractérisé en ce que** la gorge (8) s'étend sensiblement dans la direction longitudinale Z sur une longueur L1, sensiblement dans la direction transversale X sur une largeur l1, et sensiblement dans la direction verticale Y sur une profondeur h1, lesdites longueur L1, largeur 11 et profondeur h1 étant choisies de sorte à permettre la fixation d'une barre de toit transversale.

9. Pavillon de toit (1) selon l'une des revendications précédentes, **caractérisé en ce que** la longueur L1 de la partie extrême (5, 6) est comprise entre 50 mm et 800 mm et **en ce que** la largeur 11 de la gorge (8) est comprise entre 10 mm et 40 mm.

10. Véhicule, tel qu'un véhicule automobile, **caractérisé en ce qu'**il comporte un pavillon de toit (1) selon l'une quelconque des revendications 1 à 9.
